# EUROPÄISCHE PATENTSCHRIFT

(11) **EP 4 303 141 B1**
(45) Veröffentlichungstag und Bekanntmachung des Hinweises auf die Patenterteilung: **29.01.2025**
(21) Anmeldenummer: 23182776.7
(22) Anmeldetag: 30.06.2023
(51) Int. Cl.: B65B 61/04, A22C 11/10, B65B 9/12, B65B 51/04

(54) **TRENNVORRICHTUNG ZUM TRENNEN VON PORTIONEN AUS MIT LEBENSMITTEL-MASSE BEFÜLLTEN LÄNGLICHEN HÜLLEN, BETREFFENDES CRIMPELEMENT SOWIE VERFAHREN**
SEPARATING DEVICE FOR SEPARATING PORTIONS FROM ELONGATED CASINGS FILLED WITH FOOD MASS, CORRESPONDING CRIMPING ELEMENT AND METHOD
DISPOSITIF DE SÉPARATION DESTINÉ À SÉPARER DES PORTIONS DE BOYAUX ALLONGÉES REMPLIES DE MASSE ALIMENTAIRE, ÉLÉMENT DE SERTISSAGE CORRESPONDANT ET PROCÉDÉ

(30) Priorität: 08.07.2022 DE 102022117135
(43) Veröffentlichungstag der Anmeldung: 10.01.2024
(73) Patentinhaber: VEMAG Maschinenbau GmbH, 27283 Verden/Aller (DE)
(72) Erfinder: Baris, Halis, 27313 Dörverden (DE)
(74) Vertreter: Eisenführ Speiser

(56) Entgegenhaltungen:
- EP-A1- 0 440 039
- EP-A1- 3 909 430
- EP-B1- 2 117 325
- WO-A1-2017/081648
- DE-A1- 102006 016 825
- DE-B3- 102021 112 513

## Beschreibung

Die Erfindung betrifft eine Trennvorrichtung zum Trennen von Portionen aus mit Lebensmittel-Masse befüllten länglichen Hüllen, insbesondere von Würstchen-Portionen aus mit Wurstbrät gefüllten Alginat-Hüllen, mit zwei beabstandet zueinander angeordneten, mittels mindestens eines Antriebs antreibbaren umlaufenden Transportelementen, die jeweils ein Transportbereich aufweisen, welcher im Betrieb in eine Transportrichtung bewegt wird, und einen Rücklaufbereich, wobei die gefüllte Hülle zwischen die Transportbereiche der beiden Transportelemente eingebracht und in Transportrichtung transportiert werden kann, und wobei die Transportelemente derart ausgerichtet sind, dass sich der Abstand zwischen den Transportelementen in den Transportbereich in Richtung der Transportrichtung reduziert, mindestens einem an jedem Transportelement angeordneten, seitlich von dem Transportelement abstehenden Crimpelement, wobei zwei Crimpelemente der beabstandeten Transportelemente bei Bewegung in die Transportrichtung aufeinander zu bewegt werden, und wobei eines der Crimpelemente, insbesondere beide Crimpelemente, aufweisen: Einen Befestigungsabschnitt zum Befestigen des Crimpelements an dem Transportelement, einen sich ausgehend von dem Befestigungsabschnitt erstreckenden Crimpabschnitt, welcher zwei sich ausgehend von dem Grundabschnitt öffnende Schenkel aufweist, und einen Gegenhalter, welcher dazu eingerichtet ist, einen Crimpabschnitt des an dem gegenüberliegenden Transportelement angeordneten Crimpelements beim Bewegen der Crimpelemente aufeinander zu mit einer Kontaktkraft gegen den Crimpabschnitt des Crimpelements zu drücken. Ferner betrifft die Erfindung ein Crimpelement und ein zugehöriges Verfahren.

Bei bekannten Vorrichtungen und Verfahren zur Herstellung von Würstchen werden mithilfe einer Pumpe oder einer Füllmaschine und Portioniervorrichtung Kunst- oder Naturdärme mit pastöser Masse, wie beispielsweise Fleischbrät, befüllt und portioniert, sowie anschließend in einzelne Würstchen abgeteilt; auf gleiche Weise werden auch andere Massen in eine Hülle gefüllt. Die Masse wird meist durch eine Füllmaschine mit Fülltrichter und Förderpumpe bereitgestellt. Bei dieser Art von bekannten Verfahren wird mittels einer Abdreheinrichtung und der Portioniervorrichtung eine Abdrehstelle in der Darm-Hülle erzeugt, welche einzelne Portionen von Würstchen voneinander abgrenzt.

Bei einer anderen Art von gattungsgemäßen Portioniervorrichtungen findet keine Abdrehung von Würstchen-Portionen statt, sondern die Hülle wird um einen Strang der Lebensmittelmasse herum in flüssiger Form co-extrudiert. Die Hülle, die häufig aus Alginat hergestellt wird, verfestigt sich. Nach dem Herstellen einer solchen befüllten Hülle dringen während des Weitertransports sogenannte Crimpelemente in die mit Lebensmittel-Masse gefüllte Hülle ein und verdrängen sowohl die Lebensmittel-Masse als auch die Hülle, sodass eine Einschnürstelle entsteht. Aus dem Stand der Technik vorbekannte Crimpelemente weisen darüber hinaus Schneiden auf, die nach dem Ausbilden der Einschnürstelle ein Abteilen der Würstchenportionen ermöglichen.

Die Crimpelemente sind typischerweise in Abständen von etwa der Länge eines Würstchens an Förderelementen angeordnet. Die aus dem Stand der Technik vorbekannten Crimpelemente weisen einen Befestigungsabschnitt zum Befestigen des Crimpelementes an einem Transportelement auf und einen ausgehend von dem Befestigungsabschnitt erstreckenden Crimpabschnitt, welcher typischerweise zwei sich ausgehend von einem Grundabschnitt öffnende Schenkel aufweist. Im Bereich der Schenkel wiederrum sind Schneiden zum Trennen der Portionen ausgebildet.

Darüber hinaus ist aus dem Stand der Technik die Verwendung sogenannter Gegenhalter bekannt, welche dazu eingerichtet sind, einen Crimpabschnitt eines an einem gegenüberliegenden Transportelement angeordneten Crimpelements beim Bewegen der Crimpelemente aufeinander zu mit einer Kontaktkraft gegen den Crimpabschnitt des Crimpelements zu drücken. Wenngleich durch die soeben bezeichnete Ausbildung der Crimpelemente ein sicheres Abtrennen der Würstchenportionen sichergestellt wird, besteht dennoch Raum für Verbesserungen.

Aus WO 2017/081648 A1 ist eine Trennvorrichtung zum Trennen von Portionen aus mit Lebensmittel-Masse befüllten länglichen Hüllen bekannt.

So ist in der Praxis häufig beobachten worden, dass Wurstenden bei Würstchen in Alginat- oder Kollagenhülle, die nur durch das Einschnüren mit aus dem Stand der Technik vorbekannten Crimpelementen erzeugt werden, an den Trennstellen zwischen zwei Würstchen nicht vollständig verschlossen sind. Dies hat zumeist zur Folge, dass das erzeugte Wurstende nicht, wie gewünscht, dem traditionell abgedrehten Wurstende hinsichtlich seiner optischen Eigenschaften ähnelt. Derartige nicht vollständig geschlossene Trennstellen werden gelegentlich vom Verbraucher als unerwünscht wahrgenommen.

Die Erfindung möchte daher eine Trennvorrichtung, ein Crimpelement und ein zugehöriges Verfahren der eingangs genannten Art auf vorteilhafte Weise weiterbilden, derart, dass die im Stand der Technik aufgefundenen Nachteile möglichst behoben werden. Insbesondere soll eine Vorrichtung angegeben werden, die ein verbessertes Verschließen der Trennstellen zwischen zwei Würstchenportionen ermöglicht und sicherstellt, dass die Alginathülle möglichst vollständig um die Portion gezogen wird.

Erfindungsgemäß wird die Aufgabe einer Vorrichtung der eingangs genannten Art dadurch gelöst, dass der Gegenhalter derart flexibel ausgebildet ist, dass dieser zur Verbesserung der Trennwirkung der Crimpelemente eine Vorspannkraft auf das an dem gegenüberliegenden Transportelement angeordnete Crimpelement aufbringt.

Die Erfindung macht sich die Erkenntnis zunutze, dass der flexibel ausgebildete Gegenhalter ermöglicht, dass die Crimpelemente ideal ineinander gleiten. Der flexibel ausgebildete Gegenhalter stellt sicher, dass sich die Trennkraft erhöht, die zwei kooperierende Crimpelemente auf eine zu trennende Stelle eines Wurststranges ausüben, je weiter die Crimpelemente ineinander gedrückt werden. Hierdurch wird es möglich, auf die Ausbildung von Schneiden an den Crimpelementen zu verzichten, was wiederrum vorteilhaft ist in Bezug auf eine sanfte Ausbildung der Wurstenden, ohne dass die Hülle, insbesondere Alginathülle, durch Schneiden beschädigt wird. Mit anderen Worten wird ermöglicht, dass zunächst mittels der Crimpelemente ein insbesondere vollständig geschlossenes Wurstende erzeugt wird. Erst danach erfolgt ein Abteilen der WurstPortionen. Der Ausbildung von Schneiden an den Crimpelementen bedarf es dabei nicht, da bedingt durch die durch den Gegenhalter aufgebrauchte Vorspannkraft eine hinreichende Trennkraft der Crimpelemente auch ohne das Vorsehen von Schneiden erreicht wird.

Die Erfindung wird dadurch weitergebildet, dass der Gegenhalter einen Steg aufweist, welcher sich ausgehend von dem Befestigungsabschnitt erstreckt und einen Kontaktabschnitt, welcher benachbart zu dem Steg angeordnet ist, wobei der Kontaktabschnitt dazu eingerichtet ist, mit einem gegenüberliegenden Crimpelement in Kontakt zu treten und die Kontaktkraft auf das gegenüberliegende Crimpelement aufzubringen.

Vorzugsweise wird mittels der Ausgestaltung des Steges die aufzubringende Vorspannkraft beeinflusst. Insbesondere kann über eine gezielte Auswahl der Dicke des Stegs am Gegenhalter die Flexibilität des Gegenhalters beeinflusst werden, wobei insbesondere ein dickerer Steg mit einer geringeren Flexibilität des Gegenhalters einhergeht und hierdurch größere Trennkräfte erreicht werden können. Auf der anderen Seite kann über die Ausbildung eines dünneren Steges eine größere Flexibilität erreicht werden und die Trennkraft der Crimpelemente hierdurch reduziert werden. Auf diese Weise kann beispielsweise in Abhängigkeit vom zu verarbeitenden Wurstkaliber oder auch dem Füllmaterial die durch die Crimpelemente aufbringbare Trennkraft beeinflusst werden.

Gemäß einer bevorzugten Ausführungsform weist der Steg eine Dicke von 0,5 mm bis 5 mm auf. Für den Fall, dass das Crimpelement aus technischem Kunststoff, insbesondere Polyoxymethylen (POM), ausgebildet ist, beträgt die Stegdicke vorzugsweise 1 mm bis 5 mm, insbesondere 1,5 mm bis 2,5 mm. Für den Fall, dass das Crimpelement aus Metall ausgebildet ist, beträgt die Stegdicke vorzugsweise 0,5 mm bis 2 mm. Der beschriebene Dickenbereich hat sich als besonders geeignet erwiesen, um eine hinreichende Trennkraft der Crimpelemente zu erreichen.

Die Erfindung wird dadurch weitergebildet, dass sich der Gegenhalter ausgehend von dem Befestigungsabschnitt erstreckt. Somit verläuft der Gegenhalter zumindest abschnittsweise parallel zu dem Crimpabschnitt und in dieselbe Richtung wie der Crimpabschnitt ausgehend von dem Befestigungsabschnitt. Vorzugsweise weist der Gegenhalter im Bereich des Kontaktabschnitts eine über einen Höhenbereich des Crimpelements ausgebildete Aussparung auf. Hierdurch lässt sich die Flexibilität des Gegenhalters ebenfalls wie gewünscht beeinflussen. Alternativ kann die Flexibilität des Gegenhalters beispielsweise auch über eine gezielte Auswahl des Gegenhaltermaterials vorgenommen werden.

Die Erfindung wird dadurch weitergebildet, dass der Crimpabschnitt an seiner dem Gegenhalter abgewandten Seite eine Schräge aufweist, welche dazu eingerichtet ist, mit dem Kontaktabschnitt eines gegenüberliegenden Crimpelements derart zu kooperieren, dass gegenüberliegende Crimpelemente beim Bewegen aufeinander zu gegeneinandergedrückt werden. Die Schräge bewirkt in Zusammenwirkung mit dem Gegenhalter, dass sich die Trennkraft erhöht, je weiter die Crimpelemente ineinander gedrückt werden.

Gemäß einer bevorzugten Ausführungsform bildet der Gegenhalter, insbesondere zusammen mit dem Crimpabschnitt, eine Tasche aus, welche dazu eingerichtet ist, einen Crimpabschnitt eines gegenüberliegenden Crimpelements zumindest abschnittsweise aufzunehmen. Auf diese Weise wird ein jeweils gegenüberliegendes Crimpelement sicher geführt.

Die Erfindung wird dadurch weitergebildet, dass die Schenkel auf ihrer im Betrieb einem benachbart angeordneten zweiten Crimpelement zugewandten Seite eine ballig ausgebildete Trennfläche aufweisen. Hierdurch kann in Zusammenschau mit dem flexibel ausgebildeten Gegenhalter eine definierte Trennkraft, insbesondere in einem Zentrum des Crimpelements, erzeugt werden.

Gemäß einer vorteilhaften Weiterbildung der Erfindung gemäß des ersten Aspekts wird erfindungsgemäß vorgeschlagen, dass die Schenkel auf der dem Gegenhalter abgewandten Seite gewölbt ausgebildet sind und abgerundete Kanten aufweisen, sodass die befüllte Hülle unter Verdrängung der Masse in einem Einschnürbereich eingeschnürt wird und die Hülle, insbesondere vollständig, um die Portion gezogen wird, bevor die Portionen getrennt werden.

Dieser Weiterbildung der Erfindung liegt die Erkenntnis zugrunde, dass durch die gewölbte Ausbildung der Schenkel mit abgerundeten Kanten eine besonders sanfte Ausformung der Wurstenden erreicht werden kann, ohne die Hülle, insbesondere die Alginathülle, zu beschädigen. Hierdurch wird erreicht, dass die Alginathülle insbesondere vollständig um die Wurstportion herumgezogen wird, ohne dass es zu einer Durchtrennung der Portionen kommt. Erst nach einer vollständigen Ausbildung der Wurstenden erfolgt der eigentliche Trennvorgang, welcher die Wurstportionen voneinander separiert, wobei hierzu der Gegenhalter zu Erhöhung der Trennkraft eingesetzt wird.

Gemäß einer bevorzugten Ausführungsform erstrecken sich die Schenkel bogenförmig von dem Grundabschnitt ausgehend. Hierdurch wird ebenfalls eine vorteilhafte Ausbildung der Wurstenden erreicht, ohne die Alginathülle beim Ausformen der Wurstenden bereits zu beschädigen oder gar zu durchtrennen. Gemäß einer Ausführungsform ist die Wölbung als konvexe Wölbung ausgebildet.

Die Erfindung wird dadurch weitergebildet, dass der Grundabschnitt ein Zentrum ausgebildet, welches bezogen auf eine Gesamthöhe des Crimpelements asymmetrisch angeordnet ist, insbesondere wobei das Zentrum in einer Betriebsposition in einer unteren Höhenhälfte, insbesondere in einem unteren Höhendrittel, bezogen auf die Gesamthöhe H angeordnet ist. Mit andere Worten wird das Zentrum der Crimpelemente möglichst weit, in einer Betriebsposition gesehen, nach unten gezogen, damit die Fallhöhe der Würstchen-Portionen auf ein unterhalb der Crimpelemente angeordnetes Abtransportband so gering wie möglich ist.

Gemäß einer Ausführungsform sind die Crimpelemente derart relativ zu den Transportelementen ausgerichtet, dass die Crimpelemente in dem Transportbereich parallel zueinander geführt werden. Gemäß einer bevorzugten Ausführungsform ist das Crimpelement aus einem der folgenden Werkstoffe ausgebildet oder besteht hieraus: Metall, technischer Kunststoff, insbesondere Polyoxymethylen. Die vorstehende Materialauswahl hat sich für den vorgesehenen Einsatzzweck als besonders geeignet erwiesen. Es hat sich gezeigt, dass aus den vorstehenden Materialien ausgebildete Crimpelemente eine hohe Haltbarkeit aufweisen und darüber hinaus auch nach einer Vielzahl von Durchläufen eine hinreichende Vorspannkraft bereitgestellt wird.

Gemäß einer bevorzugten Ausführungsform weisen die Transportelemente Aufnahmemittel zur Aufnahme der Befestigungsabschnitte der Crimpelemente auf. Auf diese Weise können die Crimpelemente lösbar an dem Transportelement angeordnet werden und zu Wartungszwecken leicht entfernt bzw. ausgetauscht werden.

Die Erfindung ist vorstehend unter Bezugnahme auf eine Trennvorrichtung beschrieben worden. In einem weiteren Aspekt betrifft die Erfindung ein Crimpelement für eine Trennvorrichtung zum Trennen von Portionen aus mit Lebensmittel-Masse befüllten, länglichen Hüllen, insbesondere von Würstchen-Portionen aus mit Wurstbrät gefüllten Alginathüllen, wobei das Crimpelement aufweist: Einen Befestigungsabschnitt zum Befestigen des Crimpelements an dem Transportelement, ein sich ausgehend von dem Befestigungsabschnitt erstreckenden Crimpabschnitt, welcher zwei sich ausgehend von einem Grundabschnitt öffnende Schenkel aufweist, einen Gegenhalter, welcher dazu eingerichtet ist, einen Crimpabschnitt des an dem gegenüberliegenden Transportelement angeordneten Crimpelements beim Bewegen der Crimpelemente aufeinander zu mit einer Kontaktkraft gegen den Crimpabschnitt des Crimpelements zu drücken.

Die Erfindung löst die eingangs bezeichnete Aufgabe in Bezug auf das Crimpelement, indem der Gegenhalter derart flexibel ausgebildet ist, dass dieser zur Verbesserung der Trennwirkung der Crimpelemente eine Vorspannkraft auf das an dem gegenüberliegenden Transportelement angeordnete Crimpelement aufbringt.

Vorzugsweise ist das Crimpelement gemäß mindestens einem der kennzeichnenden Merkmale der vorstehenden Ausführungsbeispiele ausgebildet. Das Crimpelement macht sich somit die gleichen Vorteile und bevorzugten Ausführungsformen zunutze wie die erfindungsgemäße Trennvorrichtung und umgekehrt. Diesbezüglich wird auf die obigen Ausführungen verwiesen und deren Inhalt hiermit einbezogen.

Gemäß einer vorteilhaften Weiterbildung des Crimpelements wird erfindungsgemäß vorgeschlagen, dass die Schenkel auf der dem Gegenhalter abgewandten Seite gewölbt ausgebildet sind und abgerundete Kanten aufweisen, sodass die gefüllte Hülle unter Verdrängung der Masse in einem Einschnürbereich eingeschnürt wird und die Hülle, insbesondere vollständig, um die Portion gezogen wird, bevor die Portionen getrennt werden.

Auch das Crimpelement gemäß des weiteren Aspekts der Erfindung macht sich die gleichen Vorteile und bevorzugten Ausführungsformen zunutze, wie das erfindungsgemäße Crimpelement gemäß des ersten Aspekts und umgekehrt. Diesbezüglich wird auf die obigen Ausführungen verwiesen und deren Inhalt hier miteinbezogen.

In einem weiteren Aspekt betrifft die Erfindung ein Verfahren zum Ausbilden und Trennen von Portionen aus mit Lebensmittelmasse befüllten länglichen Hüllen, insbesondere von Würstchen-Portionen aus mit Wurstbrät gefüllten Alginathüllen, bei denen Lebensmittelmasse mittels einer Füllmaschine in die zu befüllende Hülle eingefüllt wird, die befüllte Hülle mittels einer Trennvorrichtung, insbesondere einer Trennvorrichtung nach einem der vorstehenden Ausführungsbeispiele in eine Transportrichtung transportiert wird, wobei die befüllte Hülle zwischen zwei antreibbare, umlaufende Transportelemente gebracht und mittels zweier benachbart angeordneter, jeweils an einem Transportelement angeordneter Crimpelemente in einem Einschnürbereich eingeschnürt und abgetrennt wird, wobei die Crimpelemente einen Gegenhalter, welcher dazu eingerichtet ist, einen Crimpabschnitt des an dem gegenüberliegenden Transportelement angeordneten Crimpelements bei Bewegen der Crimpelemente aufeinander zu mit einer Kontaktkraft gegen den Crimpabschnitt des Crimpelements zu drücken, wobei der Gegenhalter derart flexibel ausgebildet ist, dass dieser zur Verbesserung der Trennwirkung der Crimpelemente eine Vorspannkraft auf das an dem gegenüberliegenden Transportelement angeordnete Crimpelement aufbringt.

Das Verfahren macht sich die gleichen Vorteile und bevorzugten Ausführungsformen zunutze, wie die erfindungsgemäße Trennvorrichtung und das erfindungsgemäße Crimpelement und umgekehrt. Diesbezüglich wird auf die obigen Ausführungen erwiesen und deren Inhalt hier miteinbezogen.

Zusätzlich oder alternativ zur flexiblen Ausbildung des Gegenhalters wird auch für das Verfahren vorgeschlagen, dass die Schenkel auf der dem Gegenhalter abgewandten Seite gewölbt ausgebildet sind und abgerundete Kanten aufweisen, sodass die gefüllte Hülle unter Verdrängung der Masse in einem Einschnürbereich eingeschnürt wird und die Hülle, insbesondere vollständig, um die Portion gezogen wird, bevor die Portionen getrennt werden.

Die Erfindung wird nachstehend anhand eines Ausführungsbeispiels unter Bezugnahme auf die Figuren näher erläutert. Es zeigen:
- Fig. 1: eine Anordnung zum Herstellen von Portionen aus einer mit Lebensmittel-Masse gefüllten Hülle, umfassend eine Füllmaschine und eine Portioniervorrichtung sowie eine erfindungsgemäße Trennvorrichtung in einer Seitenansicht;
- Fig. 2 und 3: eine erfindungsgemäße Trennvorrichtung in einer perspektivischen Ansicht bzw. einer Draufsicht;
- Fig. 4: das Zusammenwirken erfindungsgemäßer Crimpelemente beim Trennen von Würstchenpositionen;
- Fig. 5: die erfindungsgemäßen Crimpelemente in Fig. 4 in einer Draufsicht;
- Fig. 6 und 7: erfindungsgemäße Crimpelemente in perspektivischen Darstellungen;
- Fig. 8 und 9: erfindungsgemäße Crimpelemente in unterschiedlichen Dimensionierungen zur Verarbeitung unterschiedlicher Wurstkaliber.

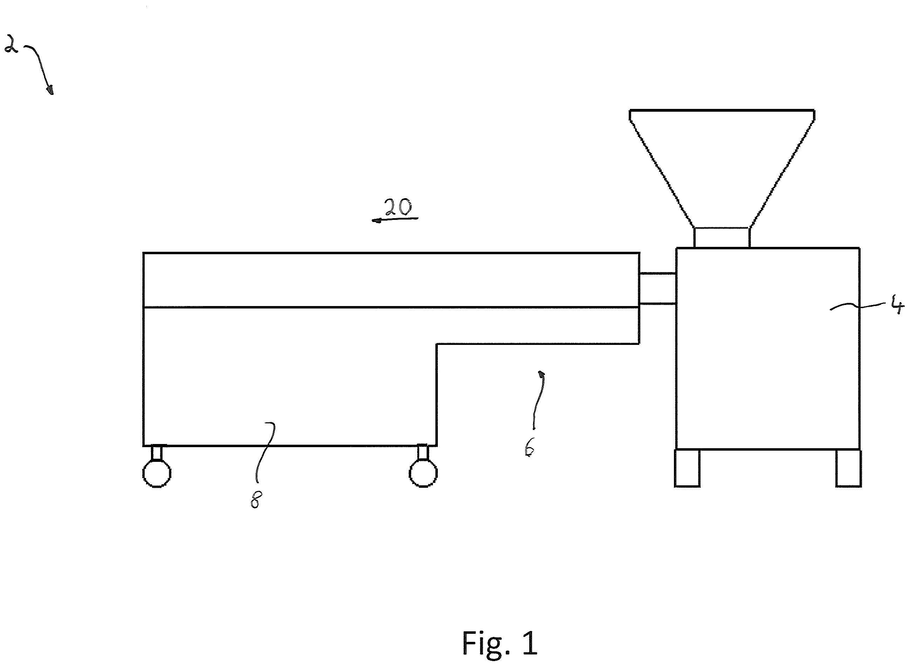

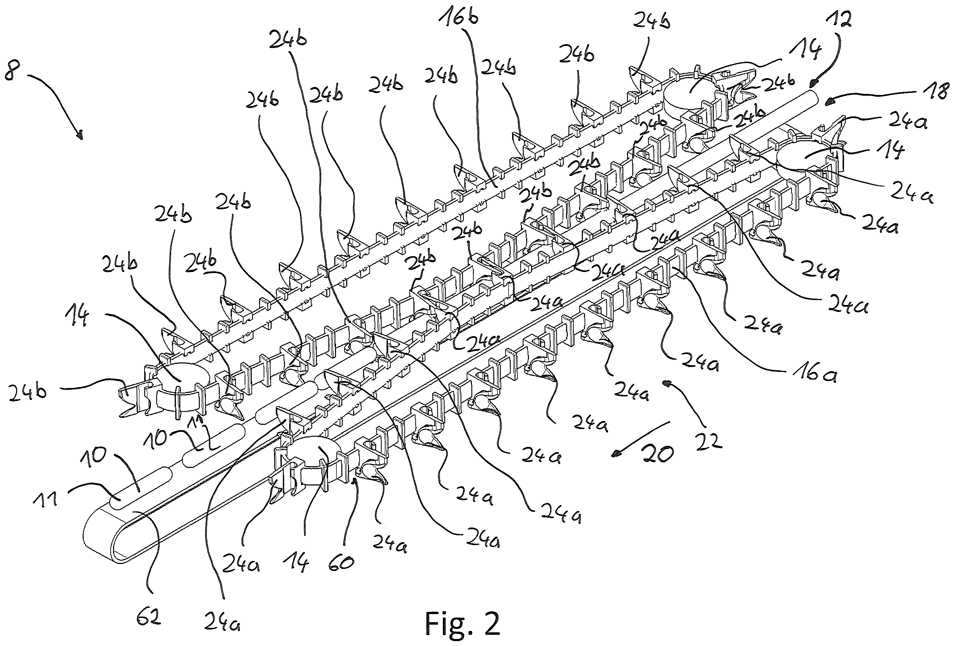

Fig. 1 zeigt eine Anordnung 2 zum Herstellen von Würstchen-Portionen 10 (nicht gezeigt, vgl. Fig. 2) aus einer mit Lebensmittelmasse 11, auch als Wurstbrät 11 bezeichnet, gefüllten Hülle 12, welche einer Füllmaschine 4, eine Portioniervorrichtung 6 sowie eine Trennvorrichtung 8 aufweist.

Innerhalb der Portioniervorrichtung 6, welche in den Figuren nicht näher detailliert ist, erfolgt eine sogenannte Co-extrusion, im Rahmen derer die Hülle 12, beispielsweise eine Alginat-Hülle 12, um einen Strang der Lebensmittelmasse 11 herum in flüssiger Form aufgebracht wird. Die Hüllen 12, auch als Wurststrang 12 bezeichnet, gelangen sodann in eine Transportrichtung 20 gesehen in den Einflussbereich der Trennvorrichtung 8, welche in Fig. 2 näher detailliert ist.

Die Trennvorrichtung 8 dient sodann zum Trennen von Portionen 10 aus den mit Lebensmittel-Masse 11 befüllten länglichen Hüllen 12, insbesondere von Würstchen-Portionen 10 aus mit Wurstbrät 11 gefüllten Alginat-Hüllen 12. Die Trennvorrichtung 8 weist zwei beabstandet zueinander angeordnete und mittels eines Antriebs 14 antreibbare umlaufende Transportelemente 16a, 16b auf, die jeweils einen Transportbereich 18 aufweisen, welcher im Betrieb in die Transportrichtung 20 bewegt wird, und einen Rücklaufbereich 22.

Die gefüllte Hülle 12 wird zwischen die Transportbereiche 18 der beiden Transportelemente 16a, 16b eingebracht und in Transportrichtung 20 transportiert. Die Transportelemente 16a, 16b sind derart ausgerichtet, dass sich der Abstand zwischen den Transportelementen 16a, 16b in dem Transportbereich 18 in Richtung der Transportrichtung 20 abschnittsweise reduziert. An jedem der Transportelemente 16a, 16b sind eine Vielzahl von Crimpelementen 24a, 24b angeordnet, die seitlich von den jeweiligen Transportelement 16a, 16b abstehen. Zwei Crimpelemente 24a, 24b der beabstandeten Transportelemente 16a, 16b werden bei Bewegung in der Transportrichtung 20 aufeinander zubewegt und aufeinander zugeführt, bzw. sodann wieder voneinander weggeführt. Wie in Fig. 2 gezeigt ist, weisen die Crimpelemente 24a, 24b etwa in einem mittleren Bereich zwischen den Antrieben 14 in dem Transportbereich 18 den geringsten Abstand zueinander auf und werden sodann, in Transportrichtung 20 gesehen, wieder voneinander separiert.

Mit anderen Worten wird somit eine mit Lebensmittelmasse 11 gefüllte Hülle 12 der Trennvorrichtung 9 zugeführt, wobei sodann gegenüberliegend angeordnete Crimpelemente 24a, 24b in Richtung der Hülle 12 und aufeinander zu bewegt werden, in einen Bereich der Hülle 12 eingreifen, Wurstenden ausformen, ohne die Alginathülle 12 vorher zu beschädigen, und erst wenn die Alginathülle 12 vollständig um die Würstchen-Portion 10 gezogen wurde, die Hülle 12 durchtrennt zur Ausbildung von Würstchen-Portionen 10. Die Würstchen-Portionen 10 gelangen sodann auf ein Abtransportband 62 und werden abtransportiert.

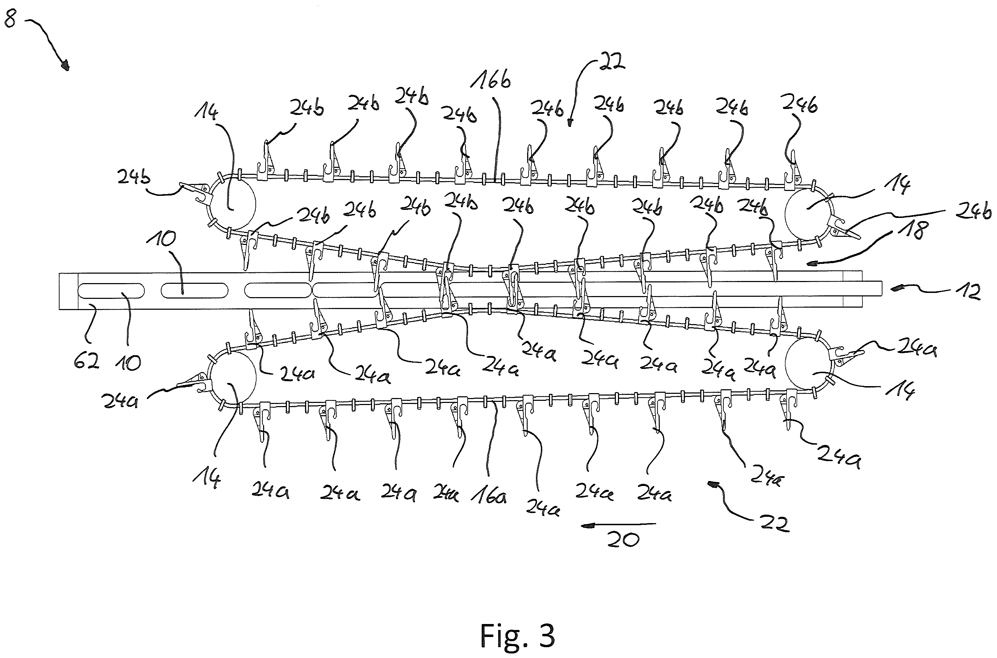

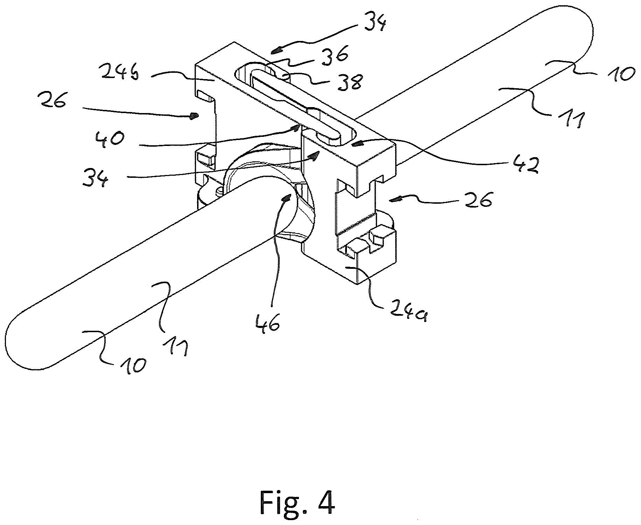

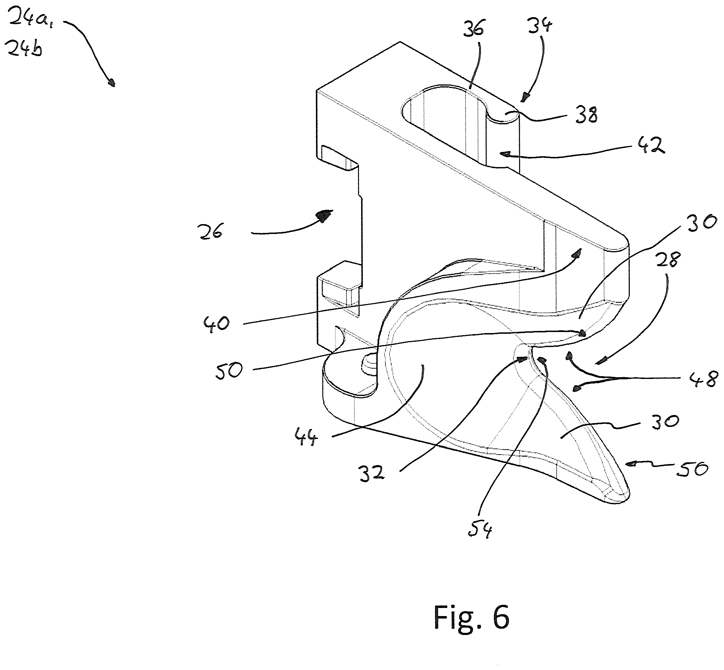

Die Form der Crimpelemente 24a, 24b ist in den nachfolgenden Figuren 4 bis 7 detailliert. Die Crimpelemente 24a, 24b weisen einen Befestigungsabschnitt 26 auf. Der Befestigungsabschnitt 26 ist dazu eingerichtet, die Crimpelemente 24a, 24b an dem jeweiligen Transportelement 16a, 16b, wie in den Figuren 2 und 3 zu befestigen. Die Transportelemente 16a, 16b weisen hierzu korrespondierende Transportelement-Aufnahmemittel 60 auf.

Die Crimpelemente 24a, 24b weisen ferner einen sich ausgehend von dem Befestigungsabschnitt 26 erstreckenden Crimpabschnitt 28 auf, welcher zwei sich ausgehend von einem Grundabschnitt 32 öffnende Schenkel 30 aufweist. Die Crimpelemente 24a, 24b weisen ferner einen Gegenhalter 34 auf, welcher dazu eingerichtet ist, einen Crimpabschnitt 28 des an dem gegenüberliegenden Transportelement 16b angeordneten Crimpelements 24b beim Bewegen der Crimpelemente 24a, 24b auf einander zu mit einer Kontaktkraft F_{K} gegen den Crimpabschnitt 28 des Crimpelements 24a zu drücken, wie dies beispielsweise in Fig. 4 gezeigt ist.

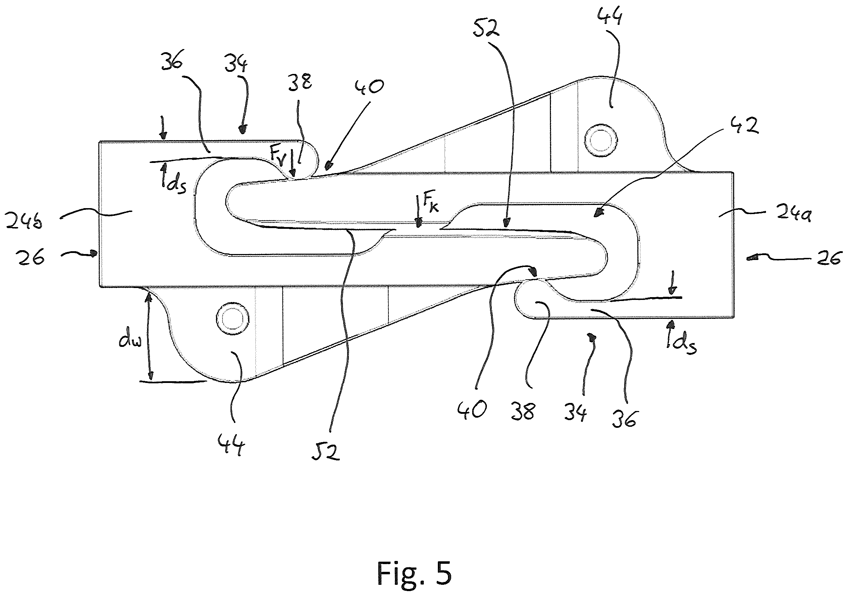

Der Gegenhalter 34 ist derart flexibel ausgebildet, dass dieser zur Verbesserung der Trennwirkung der Crimpelemente 24a, 24b eine Vorspannkraft auf das an dem gegenüberliegenden Transportelement 16b angeordnete Crimpelement 24b aufbringt. Der Gegenhalter 34 weist einen Steg 36 auf. Der Steg 36 erstreckt sich ausgehend von dem Befestigungsabschnitt 25. Der Gegenhalter 34 weist ferner einen Kontaktabschnitt 38 auf, der benachbart zu dem Steg 36 angeordnet ist. Der Kontaktabschnitt 28 ist dazu eingerichtet, mit einem gegenüberliegenden Crimpelement 24b in Kontakt zu treten und die Kontaktkraft F_{K} auf das gegenüberliegende Crimpelement 24b aufzubringen. Dabei erstreckt sich der Gegenhalter 34 ausgehend von dem Befestigungsabschnitt 26. Der Crimpabschnitt 28 weist ferner an seiner dem Gegenhalter 34 abgewandten Seite eine Schräge 40 auf. Die Schräge 40 ist dazu eingerichtet, mit dem Kontaktabschnitt 38 eines gegenüberliegenden Crimpelements derart zu kooperieren, dass gegenüberliegende Crimpelemente beim Bewegen aufeinander zu gegeneinander gedrückt werden, sodass die Crimpelemente 24a, 24b eine größere Trennkraft auf die Hülle 12 aufbringen können. Der Steg 36 weist, wie in Fig. 5 gezeigt, eine Dicke ds auf.

Der Gegenhalter 34 bildet zusammen mit dem Crimpabschnitt 28 eine Tasche 42 aus. Die Tasche 42 ist dazu eingerichtet, einen Crimpabschnitt 28 eines gegenüberliegenden Crimpelements 24b zumindest abschnittsweise aufzunehmen. Die Schenkel 30 weisen auf ihrer im Betrieb einem benachbart angeordneten zweiten Crimpelement 24b zugewandten Seite 53 eine ballig ausgebildete Trennfläche 52 auf. Durch die ballig ausgebildete Trennfläche 52 und den flexibel ausgebildeten Gegenhalter 34 wird eine definierte Trennkraft in einem Bereich des Grundabschnitts 32 der Crimpelemente 24a, 24b erzeugt.

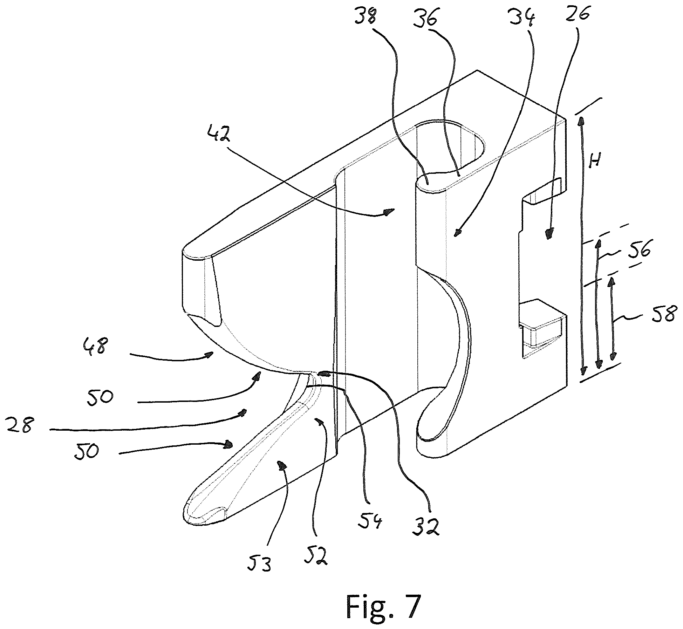

Die Schenkel 30 sind ferner auf der dem Gegenhalter 34 abgewandten Seite gewölbt 44 ausgebildet. Die Wölbung 44 weist eine Wölbungsdicke dw auf. Die Schenkel 30 weisen abgerundete Kanten 50 auf, sodass die gefüllte Hülle 12 unter Verdrängung der Masse 11 in einem Einschnürbereich 46 eingeschnürt wird und die Hülle, insbesondere vollständig, um die Portionen 10 gezogen wird, bevor die Portionen 10 getrennt werden. Die Schenkel 30 erstrecken sich bogenförmig 48 ausgehend von dem Grundabschnitt 32. Der Grundabschnitt 32 bildet ein Zentrum 54 aus, welches bezogen auf eine in Fig. 7 gezeigte Gesamthöhe H des Crimpelements 24a, 24b asymmetrisch angeordnet ist. Insbesondere ist das Zentrum 34 in einer Betriebsposition in einer unteren Höhenhälfte 56, insbesondere in einem unteren Höhendrittel 58, bezogen auf die Gesamthöhe H, angeordnet. Dabei sind die Crimpelemente 24a, 24b aus einem der folgenden Werkstoffe ausgebildet: Metall, technischer Kunststoff, insbesondere Polyoxymethylen.

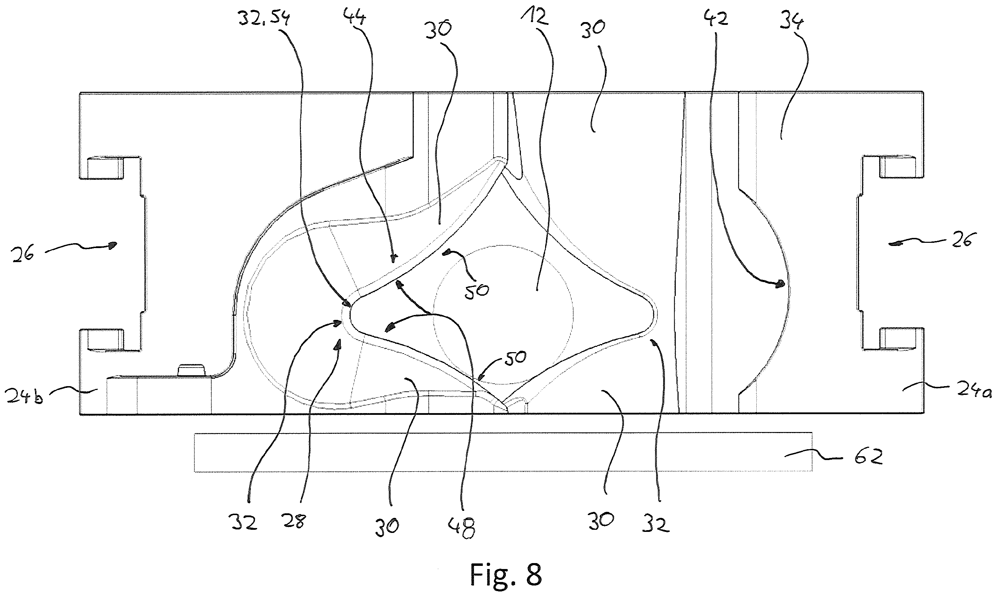

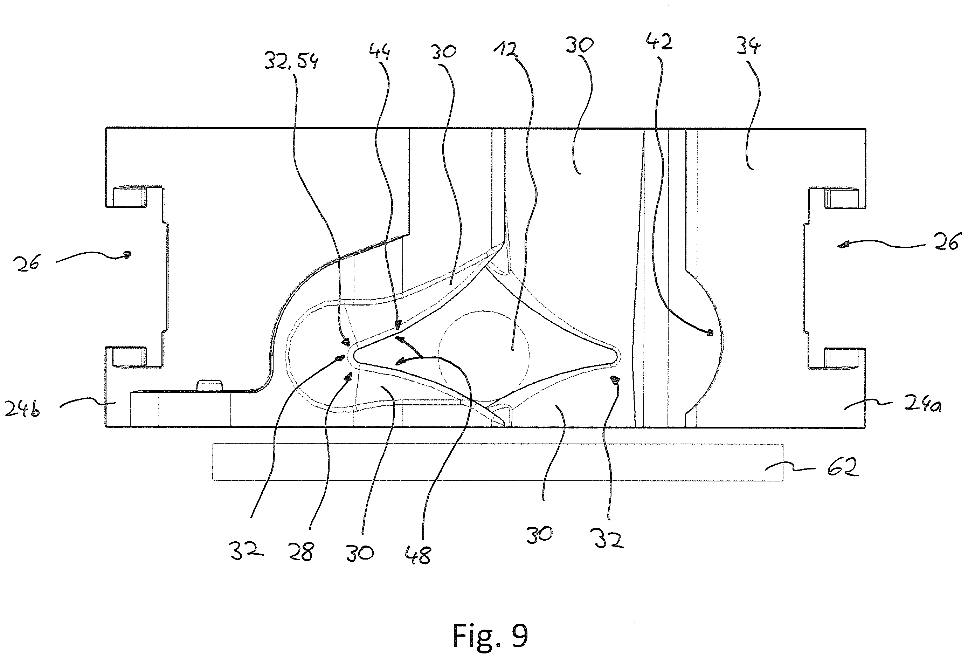

In den Fig. 8 und 9 sind unterschiedliche Geometrien der Crimpelemente 24a, 24b gezeigt, die an einen Durchmesser, auch als Kaliber bezeichnet, der jeweils gezeigten Hülle 12 angepasst sind. Die in Fig. 8 gezeigten Crimpelemente 24a, 24b sind zum Zusammenwirken mit einer Hülle 12 eines größeren Kalibers eingerichtet, die in Fig. 9 gezeigten Crimpelemente 24a, 24b zum Zusammenwirken mit einer Hülle 12 kleineren Kalibers.

Ausgehend von den in den Figuren 7 und 8 gezeigten Zuständen, lässt sich das Verfahren zum Ausbilden der Würstchen-Portionen 10 wie folgt beschreiben: Werden die Crimpelemente 24a, 24b auf die in den Fig. 2 und 3 gezeigte Weise aufeinander zubewegt, so tritt die Hülle 12 in Kontakt mit den Schenkeln 30 der Crimpelemente 24a, 24b, welche bogenförmig 48 ausgebildet sind und abgerundete Kanten 50 aufweisen. Auf diese Weise werden Enden der Würstchen-Portionen 10 sanft ausgeformt, ohne die Hülle 12, insbesondere Alginathülle 12, zu beschädigen oder gar zu durchtrennen. Erst wenn durch Relativbewegung der Crimpelemente 24a, 24b aufeinander zu die Alginathülle vollständig oder nahezu vollständig um das Ende der Würstchen-Portion 10 herumgezogen wurde, erfolgt, gewissermaßen in einem sich anschließenden zweiten Schritt, eine Separierung der Würstchen-Portionen 10. Hierzu ermöglicht der Gegenhalter 34, dass die Crimpelemente 24a, 24b ineinander gleiten.

Der Kontaktabschnitt 38 des Gegenhalters 34 korrespondiert mit der Schräge 40, wodurch sich eine Trennkraft der Crimpelemente 24a, 24b erhöht, je weiter die Crimpelemente 24a, 24b ineinander gedrückt werden. In Zusammenschau mit der ballig ausgebildeten Trennfläche 52 wird eine definierte Trennkraft im Zentrum 54 des Crimpelements erzeugt, um die Würstchen-Portionen 10 schlussendlich abzuteilen, ohne dass es hierzu ausgebildeter Schneiden an den Crimpelementen 24a, 24b bedarf. Die vorliegende Erfindung möchte gerade ohne derartige Schneiden an den Crimpelementen 24a, 24b auskommen, da sich gezeigt hat, dass derartige Schneiden bei Alginathüllen häufig Würstchen-Portionen trennen bevor die Alginathülle 12 vollständig um die Enden der Würstchen-Portionen 10 gezogen ist.

### Bezugszeichenliste

- 2: Anordnung
- 4: Füllmaschine
- 6: Portioniervorrichtung
- 8: Trennvorrichtung
- 10: Würstchen-Portionen
- 11: Lebensmittelmasse / Wurstbrät
- 12: Hülle
- 14: Antrieb
- 16a, 16b: umlaufendes Transportelement
- 18: Transportbereich
- 20: Transportrichtung
- 22: Rücklaufbereich
- 24a, 24b: Crimpelemente
- 26: Befestigungsabschnitt
- 28: Crimpabschnitt
- 30: Schenkel
- 32: Grundabschnitt
- 34: Gegenhalter
- 36: Steg
- 38: Kontaktabschnitt
- 40: Schräge
- 42: Tasche
- 44: gewölbte Ausbildung
- 46: Einschnürbereich
- 48: bogenförmige Ausbildung der Schenkel
- 50: abgerundete Kante
- 52: ballig ausgebildete Trennfläche
- 53: Seite
- 54: Zentrum
- 56: unteren Höhenhälfte
- 58: unteres Höhendrittel
- 60: Transportelement-Aufnahmemittel
- 62: Abtransportband
- ds: Stegdicke
- dw: Wölbungsdicke
- F_{K}: Kontaktkraft
- F_{V}: Vorspannkraft
- H: Gesamthöhe des Crimpelements

## Patentansprüche

1. Trennvorrichtung (8) zum Trennen von Portionen (10) aus mit Lebensmittel-Masse (11) befüllten länglichen Hüllen (12), insbesondere von Würstchen-Portionen (10) aus mit Wurstbrät (11) gefüllten Alginat-Hüllen (12),
mit zwei beabstandet zueinander angeordneten, mittels mindestens eines Antriebs (14) antreibbaren umlaufenden Transportelementen (16a, 16b), die jeweils einen Transportbereich (18) aufweisen, welcher im Betrieb in eine Transportrichtung (20) bewegt wird, und einen Rücklaufbereich (22),
wobei die gefüllte Hülle (12) zwischen die Transportbereiche (18) der beiden Transportelemente (16a, 16b) eingebracht und in Transportrichtung (20) transportiert werden kann,
und wobei die Transportelemente (16a, 16b) derart ausgerichtet sind, dass sich der Abstand zwischen den Transportelementen (16a, 16b) in dem Transportbereich (18) in Richtung der Transportrichtung (20) reduziert,
mindestens einem an jedem Transportelement (16a, 16b) angeordneten seitlich von dem Transportelement (16a, 16b) abstehenden Crimpelement (24a, 24b),
wobei zwei Crimpelemente (24a, 24b) der beabstandeten Transportelemente (16a, 16b) bei Bewegung in die Transportrichtung (20) aufeinander zu bewegt werden, und wobei eines der Crimpelemente (24a, 24b), insbesondere beide Crimpelemente (24a, 24b), aufweisen:
- einen Befestigungsabschnitt (26) zum Befestigen des Crimpelements (24a, 24b) an dem Transportelement (16a, 16b),
- einen sich ausgehend von dem Befestigungsabschnitt (26) erstreckenden Crimpabschnitt (28), welcher zwei sich ausgehend von einem Grundabschnitt (32) öffnende Schenkel (30) aufweist,
- einen Gegenhalter (34), welcher dazu eingerichtet ist, einen Crimpabschnitt (28) des an dem gegenüberliegenden Transportelement (16b) angeordneten Crimpelements (24b) beim Bewegen der Crimpelemente (24a, 24b) aufeinander zu mit einer Kontaktkraft (F_{K}) gegen den Crimpabschnitt (28) des Crimpelements (24a) zu drücken,
**dadurch gekennzeichnet, dass** der Gegenhalter (34) derart flexibel ausgebildet ist, dass dieser zur Verbesserung der Trennwirkung der Crimpelemente (24a, 24b) eine Vorspannkraft (Fv) auf das an dem gegenüberliegenden Transportelement (16b) angeordnete Crimpelement (24b) aufbringt.

2. Trennvorrichtung (8) nach Anspruch 1,
wobei der Gegenhalter (34) einen Steg (36) aufweist, welcher sich ausgehend von dem Befestigungsabschnitt (26) erstreckt und einen Kontaktabschnitt (38), welcher benachbart zu dem Steg (36) angeordnet ist, wobei der Kontaktabschnitt (38) dazu eingerichtet ist, mit einem gegenüberliegenden Crimpelement (24b) in Kontakt zu treten und die Kontaktkraft (F_{K}) auf das gegenüberliegende Crimpelement (24b) aufzubringen.

3. Trennvorrichtung (8) nach Anspruch 2,
wobei der Steg (36) eine Dicke (ds) von 0,5 mm bis 5 mm aufweist.

4. Trennvorrichtung (8) nach einem der vorstehenden Ansprüche,
wobei sich der Gegenhalter (34) ausgehend von dem Befestigungsabschnitt (26) erstreckt.

5. Trennvorrichtung (8) nach einem der vorstehenden Ansprüche,
wobei der Crimpabschnitt (28) an seiner dem Gegenhalter (34) abgewandten Seite eine Schräge (40) aufweist, welche dazu eingerichtet ist, mit dem Kontaktabschnitt (38) eines gegenüberliegenden Crimpelements (24b) derart zu kooperieren, dass gegenüberliegende Crimpelemente (24a, 24b) beim Bewegen aufeinander zu gegeneinander gedrückt werden.

6. Trennvorrichtung (8) nach einem der vorstehenden Ansprüche,
wobei der Gegenhalter (34), insbesondere zusammen mit dem Crimpabschnitt (28), eine Tasche (42) ausbildet, welche dazu eingerichtet ist, einen Crimpabschnitt (28) eines gegenüberliegenden Crimpelements (24b) zumindest abschnittsweise aufzunehmen.

7. Trennvorrichtung (8) nach einem der vorstehenden Ansprüche,
wobei die Schenkel (30) auf ihrer im Betrieb einem benachbart angeordneten zweiten Crimpelement (24b) zugewandten Seite (53) eine ballig ausgebildete Trennfläche (52) aufweisen.

8. Trennvorrichtung (8) nach einem der vorstehenden Ansprüche,
wobei die Schenkel (30) auf der dem Gegenhalter (34) abgewandten Seite gewölbt ausgebildet (44) sind und abgerundete Kanten (50) aufweisen, sodass die gefüllte Hülle (12) unter Verdrängung der Masse (11) in einem Einschnürbereich (46) eingeschnürt wird und die Hülle, insbesondere vollständig, um die Portionen (10) gezogen wird bevor die Portionen (10) getrennt werden.

9. Trennvorrichtung (8) nach Anspruch 8,
wobei sich die Schenkel (30) bogenförmig (48) von dem Grundabschnitt (32) ausgehend erstrecken.

10. Trennvorrichtung (8) nach einem der vorstehenden Ansprüche,
wobei der Grundabschnitt (32) ein Zentrum (54) ausbildet, welches bezogen auf eine Gesamthöhe (H) des Crimpelements (24a, 24b) asymmetrisch angeordnet ist, insbesondere wobei das Zentrum (54) in einer Betriebsposition in einer unteren Höhenhälfte (56), insbesondere in einem unteren Höhendrittel (58), bezogen auf die Gesamthöhe (H) angeordnet ist.

11. Trennvorrichtung (8) nach einem der vorstehenden Ansprüche, wobei das Crimpelement (24a, 24b) aus einem der folgenden Werkstoffe ausgebildet ist oder daraus besteht:
- Metall
- technischer Kunststoff, insbesondere Polyoxymethylen.

12. Trennvorrichtung (8) nach einem der vorstehenden Ansprüche, wobei die Transportelemente (16a, 16b) Aufnahmemittel (60) zur Aufnahme der Befestigungsabschnitte (26) der Crimpelemente (24a, 24b) aufweisen.

13. Crimpelement (24a, 24b) für eine Trennvorrichtung (8) zum Trennen von Portionen (10) aus mit Lebensmittel-Masse (11) befüllten, länglichen Hüllen, insbesondere von Würstchen-Portionen (10) aus mit Wurstbrät (11) gefüllten Alginat-Hüllen (12), wobei das Crimpelement (24a, 24b) aufweist:
- einen Befestigungsabschnitt (26) zum Befestigen des Crimpelements (24a, 24b) an dem Transportelement (16a, 16b),
- einen sich ausgehend von dem Befestigungsabschnitt (26) erstreckenden Crimpabschnitt (28), welcher zwei sich ausgehend von einem Grundabschnitt (32) öffnende Schenkel (30) aufweist,
- einen Gegenhalter (34), welcher dazu eingerichtet ist, einen Crimpabschnitt (28) des an dem gegenüberliegenden Transportelement (16b) angeordneten Crimpelements (24b) beim Bewegen der Crimpelemente (24a, 24b) aufeinander zu mit einer Kontaktkraft (F_{K}) gegen den Crimpabschnitt (28) des Crimpelements (24a) zu drücken,
**dadurch gekennzeichnet, dass** der Gegenhalter (34) derart flexibel ausgebildet ist, dass dieser zur Verbesserung der Trennwirkung der Crimpelemente (24a, 24b) eine Vorspannkraft auf das an dem gegenüberliegenden Transportelement (16b) angeordnete Crimpelement (24b) aufbringt.

14. Crimpelement (8) nach Anspruch 13 wobei die Schenkel (30) auf der dem Gegenhalter (34) abgewandten Seite gewölbt ausgebildet (44) sind und abgerundete Kanten (50) aufweisen, sodass die gefüllte Hülle (12) unter Verdrängung der Masse (11) in einem Einschnürbereich (46) eingeschnürt wird und die Hülle, insbesondere vollständig, um die Portionen (10) gezogen wird bevor die Portionen (10) getrennt werden.

15. Verfahren zum Ausbilden und Trennen von Portionen (10) aus mit Lebensmittelmasse (11) befüllten länglichen Hüllen (12), insbesondere von Würstchen-Portionen (10) aus mit Wurstbrät (11) gefüllten Alginat-Hüllen (12),
bei dem Lebensmittelmasse (11) mittels einer Füllmaschine (4) in die zu befüllende Hülle (12) eingefüllt wird,
die befüllte Hülle (12) mittels einer Trennvorrichtung (8), insbesondere einer Trennvorrichtung (8) nach einem der Ansprüche 1-12 in eine Transportrichtung (20) transportiert wird,
wobei die befüllte Hülle (12) zwischen zwei antreibbare, umlaufende Transportelemente (16a, 16b) gebracht und mittels zweier benachbart angeordneter, jeweils an einem Transportelement (16a, 16b) angeordneter Crimpelemente (24a, 24b) in einem Einschnürbereich (46) eingeschnürt und abgetrennt wird,
wobei die Crimpelemente (24a, 24b) aufweisen:
- einen Befestigungsabschnitt (26) zum Befestigen des Crimpelements (24a, 24b) an dem Transportelement (16a, 16b),
- einen sich ausgehend von dem Befestigungsabschnitt (26) erstreckenden Crimpabschnitt (28), welcher zwei sich ausgehend von einem Grundabschnitt (32) öffnende Schenkel (30) aufweist,
wobei die Crimpelemente (24a, 24b) einen Gegenhalter (34), welcher dazu eingerichtet ist, einen Crimpabschnitt (28) des an dem gegenüberliegenden Transportelement (16b) angeordneten Crimpelements (24b) beim Bewegen der Crimpelemente (24a, 24b) aufeinander zu mit einer Kontaktkraft (F_{K}) gegen den Crimpabschnitt (28) des Crimpelements (24a) zu drücken,
**dadurch gekennzeichnet** der Gegenhalter (34) derart flexibel ausgebildet ist, dass dieser zur Verbesserung der Trennwirkung der Crimpelemente (24a, 24b) eine Vorspannkraft auf das an dem gegenüberliegenden Transportelement (16b) angeordnete Crimpelement (24b) aufbringt.

## Claims

1. A separating device (8) for separating portions (10) of elongate casings (12) filled with food mixture (11), in particular sausage portions (10) of alginate casings (12) filled with sausage meat (11),
having two circulating transport elements (16a, 16b) which are spaced from one another, can be driven by means of at least one drive (14) and each have a transport region (18), which is moved in a transport direction (20) during operation, and a return region (22),
wherein the filled casing (12) can be introduced between the transport regions (18) of the two transport elements (16a, 16b) and can be transported in the transport direction (20),
and wherein the transport elements (16a, 16b) are oriented such that the distance between the transport elements (16a, 16b) is reduced in the transport region (18) in the direction of the transport direction (20),
at least one crimping element (24a, 24b) which is arranged on each transport element (16a, 16b) and protrudes laterally from the transport element (16a, 16b),
wherein two crimping elements (24a, 24b) of the spaced-apart transport elements (16a, 16b) are moved towards one another when moved in the transport direction (20), and
wherein one of the crimping elements (24a, 24b), in particular both crimping elements (24a, 24b), have:
- a fastening section (26) for fastening the crimping element (24a, 24b) to the transport element (16a, 16b),
- a crimping section (28) which extends from the fastening section (26) and has two arms (30) which open from a main section (32),
- a counter holder (34) which is designed to press a crimping section (28) of the crimping element (24b) arranged on the opposite transport element (16b) against the crimping section (28) of the crimping element (24a) with a contact force (F_{K}) when the crimping elements (24a, 24b) are moved towards one another,
**characterised in that** the counter holder (34) is flexible such that it applies a preloading force (Fv) to the crimping element (24b) arranged on the opposite transport element (16b) to improve the separating effect of the crimping elements (24a, 24b).

2. The separating device (8) according to Claim 1,
wherein the counter holder (34) has a ridge (36) which extends from the fastening section (26) and a contact section (38) which is arranged adjacently to the ridge (36), wherein the contact section (38) is designed to come into contact with an opposite crimping element (24b) and to apply the contact force (F_{K}) to the opposite crimping element (24b).

3. The separating device (8) according to Claim 2,
wherein the ridge (36) has a thickness (ds) of 0.5 mm to 5 mm.

4. The separating device (8) according to any one of the preceding claims,
wherein the counter holder (34) extends from the fastening section (26).

5. The separating device (8) according to any one of the preceding claims,
wherein the crimping section (28) has, on its side facing away from the counter holder (34), a slope (40) which is designed to cooperate with the contact section (38) of an opposite crimping element (24b) such that opposite crimping elements (24a, 24b) are pressed against one another when moved towards one another.

6. The separating device (8) according to any one of the preceding claims,
wherein the counter holder (34), in particular together with the crimping section (28), forms a pocket (42) which is designed to receive a crimping section (28) of an opposite crimping element (24b) at least in some sections.

7. The separating device (8) according to any one of the preceding claims,
wherein the arms (30) have, on their side (53) facing an adjacently arranged second crimping element (24b) during operation, a crowned separating face (52).

8. The separating device (8) according to any one of the preceding claims,
wherein the arms (30) are curved (44) on the side facing away from the counter holder (34) and have rounded edges (50), so that the filled casing (12) is constricted in a constriction region (46), displacing the mixture (11), and the casing is pulled, in particular completely, around the portions (10) before the portions (10) are separated.

9. The separating device (8) according to Claim 8,
wherein the arms (30) extend in an arcuate shape (48) from the main section (32).

10. The separating device (8) according to any one of the preceding claims,
wherein the main section (32) forms a centre (54) which is arranged asymmetrically in relation to a total height (H) of the crimping element (24a, 24b), in particular wherein the centre (54) is arranged in an operating position in a lower height half (56), in particular in a lower height third (58), in relation to the total height (H).

11. The separating device (8) according to any one of the preceding claims, wherein the crimping element (24a, 24b) is formed from or consists of one of the following materials:
- metal
- engineering plastic, in particular polyoxymethylene.

12. The separating device (8) according to any one of the preceding claims, wherein the transport elements (16a, 16b) have receiving means (60) for receiving the fastening sections (26) of the crimping elements (24a, 24b).

13. A crimping element (24a, 24b) for a separating device (8) for separating portions (10) of elongate casings filled with food mixture (11), in particular sausage portions (10) of alginate casings (12) filled with sausage meat (11), wherein the crimping element (24a, 24b) has:
- a fastening section (26) for fastening the crimping element (24a, 24b) to the transport element (16a, 16b),
- a crimping section (28) which extends from the fastening section (26) and has two arms (30) which open from a main section (32),
- a counter holder (34) which is designed to press a crimping section (28) of the crimping element (24b) arranged on the opposite transport element (16b) against the crimping section (28) of the crimping element (24a) with a contact force (F_{K}) when the crimping elements (24a, 24b) are moved towards one another,
**characterised in that** the counter holder (34) is flexible such that it applies a preloading force to the crimping element (24b) arranged on the opposite transport element (16b) to improve the separating effect of the crimping elements (24a, 24b).

14. The crimping element (8) according to Claim 13,
wherein the arms (30) are curved (44) on the side facing away from the counter holder (34) and have rounded edges (50), so that the filled casing (12) is constricted in a constriction region (46), displacing the mixture (11), and the casing is pulled, in particular completely, around the portions (10) before the portions (10) are separated.

15. A method for forming and separating portions (10) of elongate casings (12) filled with food mixture (11), in particular sausage portions (10) of alginate casings (12) filled with sausage meat (11),
in which food mixture (11) is inserted into the casing (12) to be filled by means of a filling machine (4),
the filled casing (12) is transported in a transport direction (20) by means of a separating device (8), in particular a separating device (8) according to one of Claims 1-12,
wherein the filled casing (12) is brought between two drivable, circulating transport elements (16a, 16b) and is constricted in a constriction region (46) and separated by means of two adjacently arranged crimping elements (24a, 24b) which are each arranged on a transport element (16a, 16b),
wherein the crimping elements (24a, 24b) have
- a fastening section (26) for fastening the crimping element (24a, 24b) to the transport element (16a, 16b),
- a crimping section (28) which extends from the fastening section (26) and has two arms (30) which open from a main section (32),
wherein a counter holder (34) which is designed to press a crimping section (28) of the crimping element (24b) arranged on the opposite transport element (16b) against the crimping section (28) of the crimping element (24a) with a contact force (F_{K}) when the crimping elements (24a, 24b) are moved towards one another,
**characterised in that** the counter holder (34) is flexible such that it applies a preloading force to the crimping element (24b) arranged on the opposite transport element (16b) to improve the separating effect of the crimping elements (24a, 24b).

## Revendications

1. Dispositif de séparation (8) destiné à séparer des portions (10) d'enveloppes allongées (12) remplies de masse de produit alimentaire (11), en particulier de portions de saucisse (10) d'enveloppes en alginate (12) remplies de chair à saucisse (11),
avec deux éléments de transport (16a, 16b) circulant en périphérie disposés à distance l'un par rapport à l'autre, pouvant être entraînés au moyen d'au moins un entraînement (14), qui présentent respectivement une zone de transport (18), laquelle est déplacée en fonctionnement dans une direction de transport (20), et une zone de retour (22),
dans lequel l'enveloppe remplie (12) est introduite entre les zones de transport (18) des deux éléments de transport (16a, 16b) et peut être transportée dans la direction de transport (20),
et dans lequel les éléments de transport (16a, 16b) sont orientés de telle manière que la distance entre les éléments de transport (16a, 16b) se réduit dans la zone de transport (18) en direction de la direction de transport (20),
au moins un élément de sertissage (24a, 24b) disposé sur chaque élément de transport (16a, 16b) dépassant latéralement de l'élément de transport (16a, 16b),
dans lequel deux éléments de sertissage (24a, 24b) des éléments de transport (16a, 16b) espacés sont déplacés l'un vers l'autre lors du déplacement dans la direction de transport (20), et dans lequel un des éléments de sertissage (24a, 24b), en particulier les deux éléments de sertissage (24a, 24b), présentent :
- une section de fixation (26) destinée à fixer l'élément de sertissage (24a, 24b) sur l'élément de transport (16a, 16b),
- une section de sertissage (28) s'étendant en partant de la section de fixation (26), laquelle présente deux branches (30) s'ouvrant en partant d'une section de base (32),
- un contre-support (34), lequel est mis au point pour pousser une section de sertissage (28) de l'élément de sertissage (24b) disposé sur l'élément de transport (16b) opposé contre la section de sertissage (28) de l'élément de sertissage (24a) avec une force de contact (F_{K}) lors du déplacement des éléments de sertissage (24a, 24b) l'un vers l'autre,
**caractérisé en ce que** le contre-support (34) est réalisé de manière flexible de telle manière que celui-ci applique une force de précontrainte (Fv) sur l'élément de sertissage (24b) disposé sur l'élément de transport (16b) opposé pour améliorer l'action de séparation des éléments de sertissage (24a, 24b).

2. Dispositif de séparation (8) selon la revendication 1,
dans lequel le contre-support (34) présente une entretoise (36), laquelle s'étend en partant de la section de fixation (26), et une section de contact (38), laquelle est disposée de manière adjacente à l'entretoise (36), dans lequel la section de contact (38) est mise au point pour entrer en contact avec un élément de sertissage (24b) opposé et pour appliquer la force de contact (F_{K}) sur l'élément de sertissage (24b) opposé.

3. Dispositif de séparation (8) selon la revendication 2,
dans lequel l'entretoise (36) présente une épaisseur (dₛ) de 0,5 mm à 5 mm.

4. Dispositif de séparation (8) selon l'une quelconque des revendications précédentes,
dans lequel le contre-support (34) s'étend en partant de la section de fixation (26).

5. Dispositif de séparation (8) selon l'une quelconque des revendications précédentes,
dans lequel la section de sertissage (28) présente, sur son côté opposé au contre-support (34), un chanfrein (40), lequel est mis au point pour coopérer avec la section de contact (38) d'un élément de sertissage (24b) opposé de telle manière que des éléments de sertissage (24a, 24b) opposés sont pressés lors du déplacement l'un vers l'autre.

6. Dispositif de séparation (8) selon l'une quelconque des revendications précédentes,
dans lequel le contre-support (34) réalise, en particulier conjointement avec la section de sertissage (28), un compartiment (42), qui est mis au point pour recevoir au moins par endroits une section de sertissage (28) d'un élément de sertissage (24b) opposé.

7. Dispositif de séparation (8) selon l'une quelconque des revendications précédentes,
dans lequel les branches (30) présentent, sur leur côté (53) tourné en fonctionnement vers un deuxième élément de sertissage (24b) disposé de manière adjacente, une surface de séparation (52) réalisée de manière bombée.

8. Dispositif de séparation (8) selon l'une quelconque des revendications précédentes,
dans lequel les branches (30) sont réalisées (44) de manière voûtée sur le côté opposé au contre-support (34) et présentent des arêtes (50) arrondies si bien que l'enveloppe (12) remplie est resserrée dans une zone de resserrement (46) en repoussant la masse (11) et l'enveloppe est tirée, en particulier en totalité, autour des portions (10) avant que les portions (10) ne soient séparées.

9. Dispositif de séparation (8) selon la revendication 8,
dans lequel les branches (30) s'étendent en forme d'arc (48) en partant de la section de base (32).

10. Dispositif de séparation (8) selon l'une quelconque des revendications précédentes,
dans lequel la section de base (32) forme un centre (54), lequel est disposé de manière asymétrique par rapport à une hauteur totale (H) de l'élément de sertissage (24a, 24b), en particulier dans lequel le centre (54) est disposé dans une position de fonctionnement dans une moitié inférieure de hauteur (56), en particulier dans un tiers inférieur de hauteur (58), par rapport à la hauteur totale (H).

11. Dispositif de séparation (8) selon l'une quelconque des revendications précédentes, dans lequel l'élément de sertissage (24a, 24b) est réalisé à partir d'un des matériaux suivants ou est constitué d'un de ceux-ci :
- métal
- matière plastique technique, en particulier du polyoxyméthylène.

12. Dispositif de séparation (8) selon l'une quelconque des revendications précédentes, dans lequel les éléments de transport (16a, 16b) présentent des moyens de réception (60) destinés à recevoir les sections de fixation (26) des éléments de sertissage (24a, 24b).

13. Elément de sertissage (24a, 24b) pour un dispositif de séparation (8) destiné à séparer des portions (10) d'enveloppes allongées remplies de masse de produit alimentaire (11), en particulier de portions de saucisse (10) d'enveloppes en alginate (12) remplies de chair à saucisse (11), dans lequel l'élément de sertissage (24a, 24b) présente :
- une section de fixation (26) destinée à fixer l'élément de sertissage (24a, 24b) sur l'élément de transport (16a, 16b),
- une section de sertissage (28) s'étendant en partant de la section de fixation (26), laquelle présente deux branches (30) s'ouvrant en partant d'une section de base (32),
- un contre-support (34), lequel est mis au point pour pousser une section de sertissage (28) de l'élément de sertissage (24b), disposé sur l'élément de transport (16b) opposé, contre la section de sertissage (28) de l'élément de sertissage (24a) avec une force de contact (F_{K}) lors du déplacement des éléments de sertissage (24a, 24b) l'un vers l'autre,
**caractérisé en ce que** le contre-support (34) est réalisé de manière flexible de telle manière que celui-ci applique une force de précontrainte sur l'élément de sertissage (24b) disposé sur l'élément de transport (16b) opposé pour améliorer l'action de séparation des éléments de sertissage (24a, 24b).

14. Elément de sertissage (8) selon la revendication 13,
dans lequel les branches (30) sont réalisées (44) de manière bombée sur le côté opposé au contre-support (34) et présentent des arêtes (50) arrondies si bien que l'enveloppe (12) remplie est resserrée dans une zone de resserrement (46) en repoussant la masse (11) et l'enveloppe est tirée, en particulier en totalité, autour des portions (10) avant que les portions (10) ne soient séparées.

15. Procédé de réalisation et de séparation de portions (10) d'enveloppes allongées (12) remplies de masse de produit alimentaire (11), en particulier de portions de saucisse (10) d'enveloppes en alginate (12) remplies de chair à saucisse (11),
où une masse de produit alimentaire (11) est transvasée dans l'enveloppe (12) à remplir au moyen d'une remplisseuse (4),
l'enveloppe (12) remplie est transportée dans une direction de transport (20) au moyen d'un dispositif de séparation (8), en particulier d'un dispositif de séparation (8) selon l'une quelconque des revendications 1 à 12,
dans lequel l'enveloppe (12) remplie est amenée entre deux éléments de transport (16a, 16b) circulant en périphérie, pouvant être entraînés, et est resserrée et sectionnée dans une zone de resserrement (46) au moyen de deux éléments de sertissage (24a, 24b) disposés de manière adjacente, disposés respectivement sur un élément de transport (16a, 16b),
dans lequel les éléments de sertissage (24a, 24b) présentent :
- une section de fixation (26) destinée à fixer l'élément de sertissage (24a, 24b) sur l'élément de transport (16a, 16b),
- une section de sertissage (28) s'étendant en partant de la section de fixation (26), laquelle présente deux branches (30) s'ouvrant en partant d'une section de base (32),
dans lequel les éléments de sertissage (24a, 24b) présentent un contre-support (34), lequel est mis au point pour pousser une section de sertissage (28) de l'élément de sertissage (24b), disposé sur l'élément de transport (16b) opposé, contre la section de sertissage (28) de l'élément de sertissage (24a) avec une force de contact (F_{K}) lors du déplacement des éléments de sertissage (24a, 24b) l'un vers l'autre,
**caractérisé en ce que** le contre-support (34) est réalisé de manière flexible de telle manière que celui-ci applique une force de précontrainte sur l'élément de sertissage (24b) disposé sur l'élément de transport (16b) opposé pour améliorer l'action de séparation des éléments de sertissage (24a, 24b).
